# EUROPEAN PATENT APPLICATION

(11) **EP 1 835 130 A2**
(43) Date of publication of application: **19.09.2007**
(21) Application number: 07103753.5
(22) Date of filing: 08.03.2007
(51) Int. Cl.: F01D 21/12, F02C 9/22, F01D 17/16, F02K 1/06

(54) **Continuous real time exhaust gas temperature margin control**

(30) Priority: 15.03.2006 US 376507
(71) Applicant: General Electric Company, Schenectady, NY 12345 (US)
(72) Inventor: Cooker, Paul, Finneytown, OH 45231 (US); Orlando, Robert Joseph, West Chester, OH 45069 (US); Lee, Ching-Pang, Cincinnati, OH 45243 (US); Kattalaicheri, Srinivasan, West Chester, OH 45069 (US)
(74) Representative: Bedford, Grant Richard

(57) **Abstract**

A method and system for maintaining a limiting gas temperature in a gas turbine engine working fluid flowpath (7) by monitoring the gas temperature and adjusting one or more parameters when the gas temperature exceeds a predetermined or a calculated temperature limit during engine operation. The parameters include one or more of a group of engine parameters including high and low pressure turbine nozzle flow areas (42, 52), fan and core flow areas (62, 72), and a rotor speed (N). The one or more parameters are adjusted to lower the gas temperature to below the temperature limit during engine operation. The limiting gas temperature may be a turbine exhaust gas temperature such as a high pressure turbine exhaust gas temperature. The turbine nozzle flow areas may be adjusted with variable nozzle vanes and the fan and core exhaust nozzle flow areas with a translatable fan nozzle cowling and a translatable core nozzle plug, respectively.

## Description

This invention relates generally to gas turbine engines and maintaining flowpath temperature margins, more particularly, to systems and methods for maintaining sufficient temperature margins such as EGT margin to extend the time-on-wing until the engine reaches scheduled overhaul maintenance.

Gas turbine engines are designed to operate within flowpath gas temperature margins. Hot flowpath components are subject to deterioration during operation over time. Engine controls are used to automatically adjust the engines to compensate for the component deterioration and meet engine power requirements. This typically causes hot flowpath gas temperatures to increase thus decreasing temperature margins such as exhaust gas temperature (EGT) margins. The engine must be serviced when the temperature margins fall below predetermined threshold values. This typically is done when the engine is overhauled at a service facility. During the overhaul, various deteriorated and damaged engine components are replaced which restores temperature margins. Such overhauls are expensive and time consuming.

U.S. Patent No. 6,681,558 describes a method that includes adjusting at least one engine parameter selected from a first group of engine parameters including a nozzle area and a rotor speed to extend time between service to restore flowpath temperature margins. This method is designed to achieve substantial savings by reducing number and frequency of overhauls to restore flowpath temperature margins. This method is also designed to allow these overhauls to coincide with scheduled facility or airframe maintenance or with replacement of life limited components within the engine for even greater savings.

Moreover, because life limited components are sometimes replaced sooner than necessary when the engine is overhauled to recover engine gas temperature margin, optimal use of the life limited components is not achieved. Replacing life limited components before their lives are entirely exhausted necessitates more components being used over the life of an engine which increases operating expenses. Maintaining spare components inventories to meet the more frequent replacement schedule further increases expenses. Thus, it is anticipated that recovering engine gas temperature margin without removing engines from service could provide a substantial savings.

It is highly desirable to be able to maintain or restore as much as possible optimum blade tip clearance in an aircraft gas turbine engine between seal and/or blade tip replacement or refurbishment. It is also highly desirable to accurately and automatically compensate for the deterioration in engine performance due to increase blade tip clearance due to wear.

Various aspects and embodiments of the present invention provide a system and method for maintaining a limiting gas temperature (EGT) in an engine working fluid flowpath in a gas turbine engine includes monitoring the gas temperature in the gas turbine engine flowpath during engine operation and adjusting one or more engine parameters during the engine operation. The one or more engine parameters are selected from a group of engine parameters including high and low pressure turbine nozzle flow areas and a rotor speed. The adjustments are made when the gas temperature exceeds a predetermined or calculated temperature limit. The calculated temperature limit is calculated during the engine operation. The one or more parameters are adjusted to lower the gas temperature to below the temperature limit during engine operation.

The high and/or low pressure turbine nozzle flow areas may be adjusted using variable high and/or low pressure turbine nozzle vanes, respectively. The gas turbine engine may be an aircraft gas turbine engine and the group of engine parameters further includes fan and core flow areas. The fan flow area may be adjusted by axially translating an outer cowl forwardly and aftwardly at a fan exhaust nozzle at a fan exit of a bypass duct of the engine. The core flow area may be adjusted by axially translating a nozzle plug forwardly and aftwardly at a core exhaust nozzle of the engine. The working fluid flowpath may be a hot turbine flowpath and the limiting gas temperature may be an exhaust gas temperature (EGT).

Various aspects and other features of the invention are explained in the following description, taken in connection with the accompanying drawings where:
FIG. 1 is a schematical cross-sectional view illustration of a first exemplary aircraft gas turbine engine continuous EGT margin control system.
FIG. 2 is an enlarged schematical cross-sectional view illustration of turbine sections illustrated in FIG. 1.
FIG. 3 is a schematical cross-sectional view illustration of a second exemplary embodiment of the aircraft gas turbine engine continuous EGT margin control system illustrated in FIG. 1.
FIG. 4 is an enlarged schematical cross-sectional view illustration of turbine sections illustrated in FIG. 3.
FIG. 5 is a schematical cross-sectional view illustration of a variable area fan exhaust nozzle of the aircraft gas turbine engine continuous EGT margin control system illustrated in FIG. 3.
FIG. 6 is a schematical cross-sectional view illustration of a translating a nozzle plug in a variable area core exhaust nozzle of the aircraft gas turbine engine continuous EGT margin control system illustrated in FIG. 3.
FIG. 7 is a schematical illustration of the aircraft gas turbine engine continuous EGT margin control system illustrated in FIG. 1.

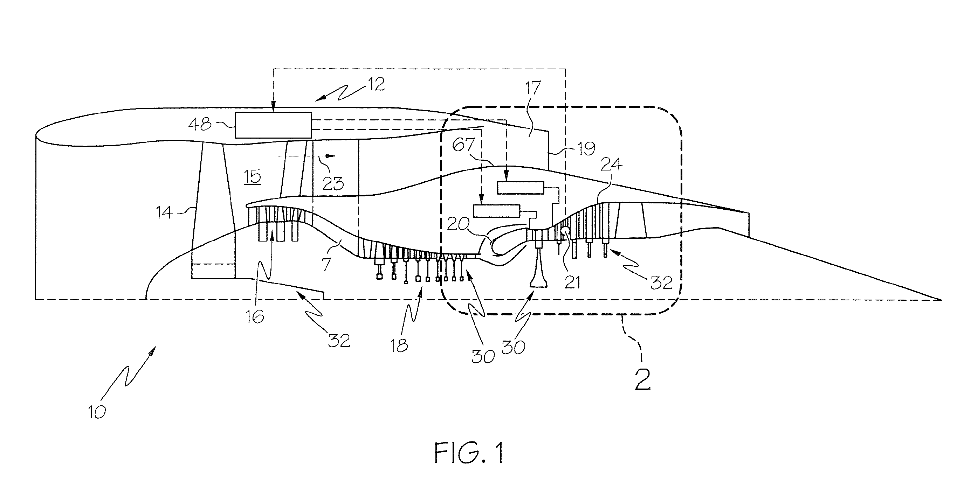

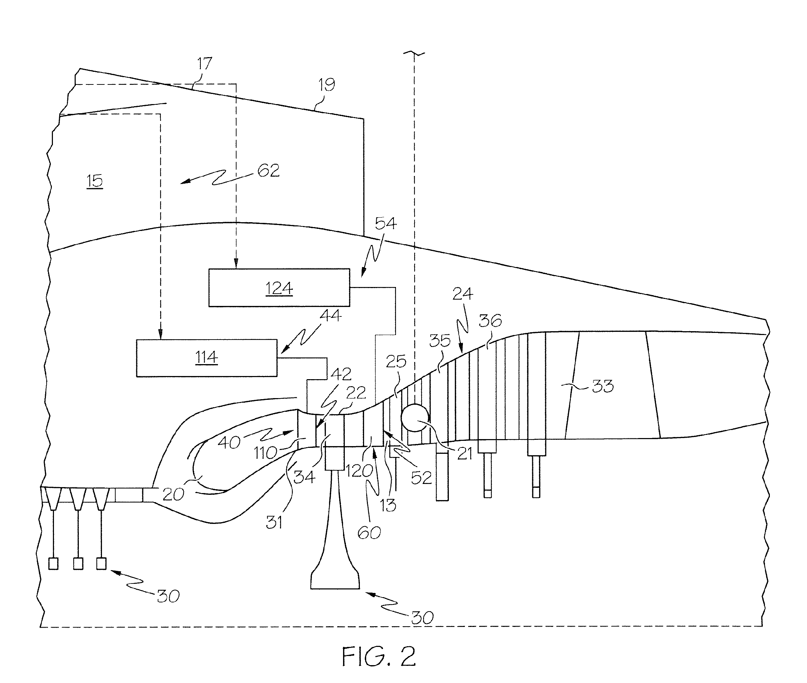

Schematically illustrated in cross-section in FIGS. 1 and 2 is a first exemplary embodiment of a gas turbine engine 10 including a real time continuous flowpath gas temperature margin control system 12. The control system 12 illustrated herein uses exhaust gas temperature (EGT) in a hot turbine flowpath 13 of an engine working fluid flowpath 7 in the engine 10. Other flowpath gas temperatures from other parts of the working fluid flowpath 7 may be used and other gas temperature margins may be also be used. The engine illustrated herein is an aircraft gas turbine engine 10 and representative of gas turbine engines that can employ the real time continuous gas temperature margin control system 12. Such engines include marine and industrial gas turbine engines for example.

The flowpath gas temperature margin control system 12 and its method of operation are used to limit high temperatures in the flowpath that leads to deterioration of hot parts along the flowpath. The temperature margin control system 12 is designed to achieve substantial savings by reducing number and frequency of overhauls to restore flowpath temperature margins. This system and method may also be used allow these overhauls to coincide with scheduled facility or airframe maintenance or with replacement of life limited components within the engine.

The engine 10 has, in serial flow relationship, a fan 14, a booster or low pressure compressor (LPC) 16, a high pressure compressor (HPC) 18, a combustion section 20, a high pressure turbine (HPT) 22, and a low pressure turbine (LPT) 24. The HPT 22 is drivingly connected to the HPC 18 and the LPT 24 is drivingly connected to LPC 16 and the fan 14. The HPT 22 includes an HPT rotor 30 having HPT turbine blades 34 mounted at a periphery of the HPT rotor 30. The LPT 24 includes an LPT rotor 32 having LPT turbine blades 36 mounted at a periphery of the LPT rotor 32. The hot turbine flowpath 13 extends downstream from an HPT inlet 31 of the HPT 22 to an LPT outlet 33 of the LPT 24. The LPT outlet 33 is also referred to as core discharge. A fan bypass duct 15 surrounds the fan 14 and a booster or low pressure compressor 16 and includes a fan exhaust nozzle 17 at a fan exit 19 of the bypass duct 15 through which fan bypass air 23 is exhausted from the engine 10. An electronic controller 48, illustrated herein as a digital electronic engine control system often referred to as a Full Authority Digital Electronic Control (FADEC), controls, to a great extent, the operation of the engine.

The power generated by the engine 10 is dependent on various engine parameters such as flowpath areas. Some of these parameters are set when the engine is designed and built. Other parameters such as fuel flow may be adjusted by complex engine control systems such as the controller 48 during engine operation to obtain the desired power. These control systems also monitor various engine parameters such as rotor speeds, flowpath temperatures, and flowpath pressures. The real time continuous flowpath gas temperature margin control system 12 and method maintains a limiting gas temperature such as the exhaust gas temperature (EGT) in a gas turbine engine flowpath such as the hot turbine flowpath 13.

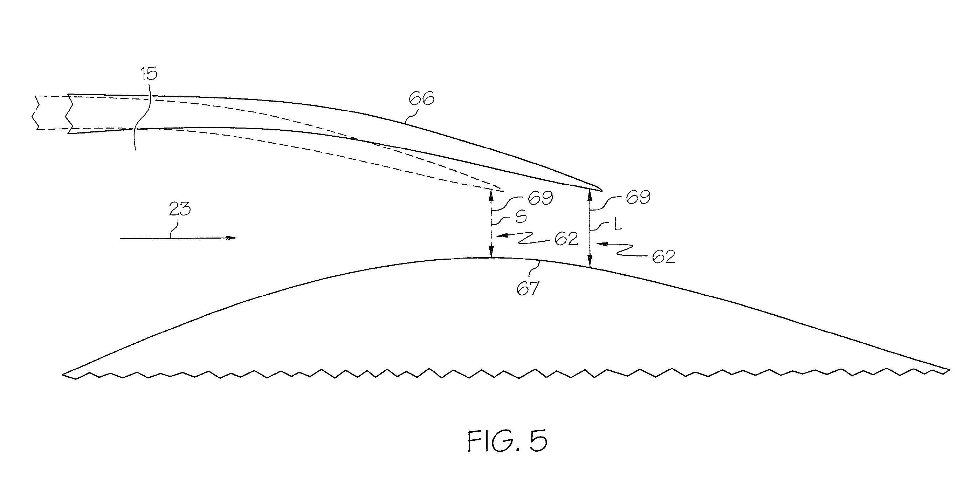

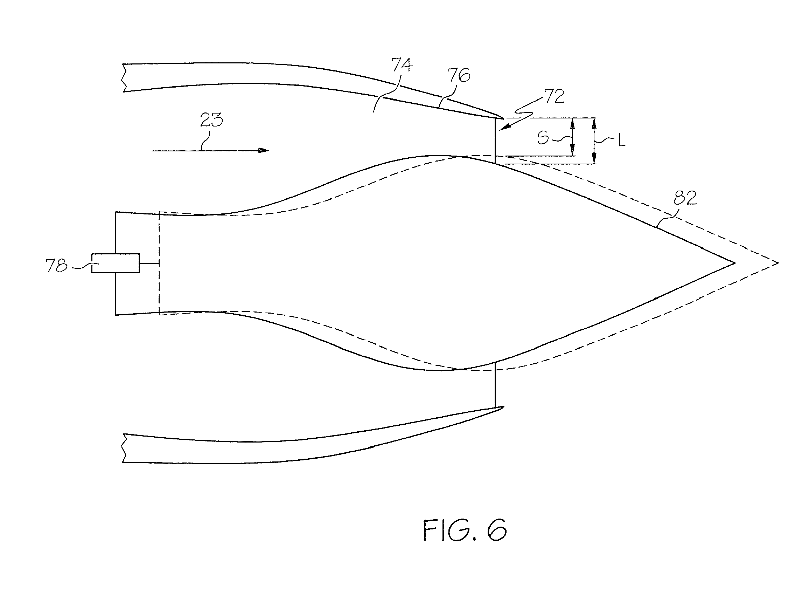

The exhaust gas temperature (EGT) is measured by one or more thermocouples 21, or other temperature measuring sensors, between first and second stages 25, 35 of the low pressure turbine 24. The gas temperature in the gas turbine engine flowpath is monitored continuously during operation of the engine 10. One or more engine parameters are adjusted when the gas temperature exceeds a predetermined or a calculated engine operating temperature limit. The engine parameters include high and low pressure turbine flow areas 42, 52, fan and core flow areas 62, 72 (illustrated in FIGS. 2, 5, and 6), and a rotor speed N. The rotor speed N is illustrated herein as that of the high pressure rotor 30 which includes the HPT 22 drivingly connected to the HPC 18. The one or more parameters are adjusted in real time, continuously or periodically during the engine's operation to lower the gas temperature to below the temperature limit.

The HPT 22 further includes an HPT nozzle 40 having the variable HPT flow area 42 varied by a row of variable high pressure turbine nozzle vanes 110 disposed downstream of the combustion section 20 and upstream of the HPT turbine blades 34. The variable high pressure turbine nozzle vanes 110 are pivotable. An HPT actuation system 44 is provided to vary the HPT flow area 42. The HPT actuation system 44 includes the nozzle vanes 110 being connected to an HPT actuator 114 by HPT actuation levers and an HPT unison ring (not shown). The HPT actuation system 44 is used to pivot the HPT nozzle vanes 110 thus opening and closing the HPT nozzle vanes 110 and increasing and decreasing the HPT flow area 42, respectively.

The LPT 24 further includes an LPT nozzle 60 having a variable LPT flow area 52 and a row of low pressure turbine nozzle vanes 120 disposed downstream of the high pressure turbine 22 and upstream of the LPT turbine blades 36. The low pressure turbine nozzle vanes 120 are variable and pivotable. An LPT actuation system 54 is provided to vary the LPT flow area 52. The LPT actuation system 54 includes the LPT nozzle vanes 120 being connected to an LPT actuator 124 by HPT actuation levers and an HPT unison ring (not shown). The LPT actuation system 54 is used to pivot the LPT nozzle vanes 120 thus opening and closing the LPT nozzle vanes 120 and increasing and decreasing the LPT flow area 52, respectively.

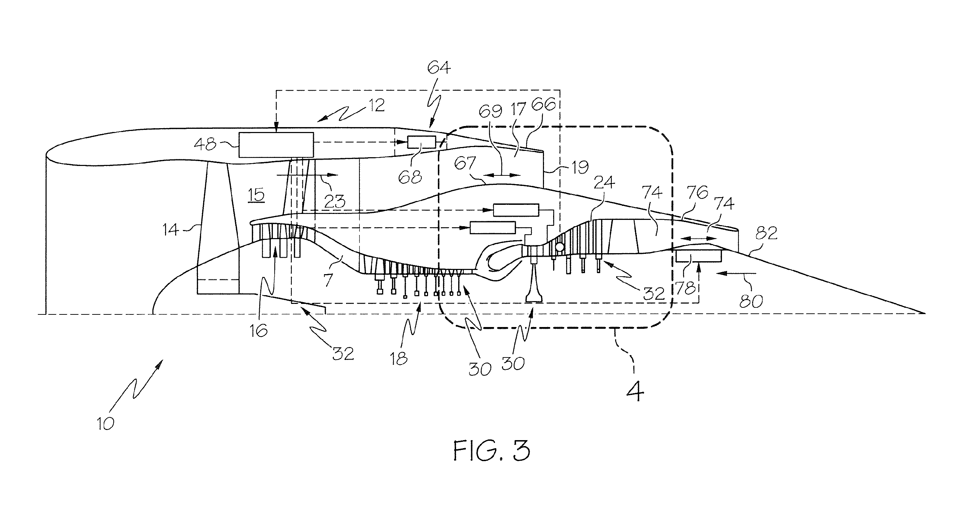

Illustrated in FIGS. 3, 4, and 5 is a second exemplary embodiment of a gas turbine engine 10 in which the real time continuous flowpath gas temperature margin control system 12 further includes the variable fan flow area 62 located within the fan bypass duct 15 and the variable core flow area 72 discussed below. The fan flow area 62 is exemplified herein as being located at the fan exhaust nozzle 17 at the fan exit 19 and, thus, is a fan exhaust nozzle flow area. Several methods are well known to vary the fan flow area 62. One such method illustrated herein employs a fan nozzle area actuation system 64 to vary the fan flow area 62 by axially translating an outer cowl 66 forwardly and aftwardly at the fan exhaust nozzle 17 with outer cowl linear actuators 68, illustrated in FIG. 3, thus, providing a variable area fan exhaust nozzle 17.

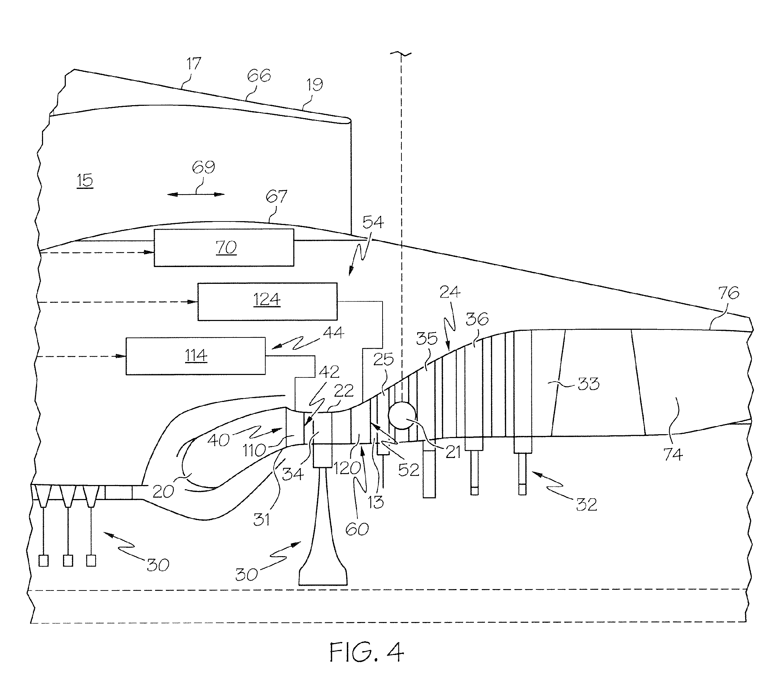

Referring to FIGS. 3, 4, and 5, when the outer cowl 66 is positioned in an axially aft position, illustrated in dashed line, the fan flow area 62 is large L at a throat 69 of the fan exhaust nozzle 17. When the outer cowl 66 is positioned in an axially forward position, illustrated in solid line, the fan flow area 62 is small S at the throat 69 of the fan exhaust nozzle 17. The outer cowl 66 radially outwardly bounds the fan bypass duct 15. Alternatively, an inner cowl 67, radially inwardly bounding the fan bypass duct 15, may be translated aftwardly and forwardly with inner cowl linear actuators 70, illustrated in FIG. 4, to vary the fan flow area 62, thus providing a variable area fan exhaust nozzle 17. It is also known to use pivotable fan vanes (not shown) within the fan bypass duct 15 at or near the fan exit 19 to vary the fan flow area 62.

Illustrated in FIGS. 3, 4, and 6, is the variable core flow area 72 located at a variable area core exhaust nozzle 76 within a core discharge duct 74 located downstream of the LPT 24. The core flow area 72 is exemplified herein as being located at the core exhaust nozzle 76 and, thus, is a core exhaust nozzle flow area. A core nozzle area actuation system 80 is used to vary the core flow area 72 by axially translating a nozzle plug 82 forwardly and aftwardly at the core exhaust nozzle 76 with core linear actuators 78 in a manner similar to translation of the cowl.

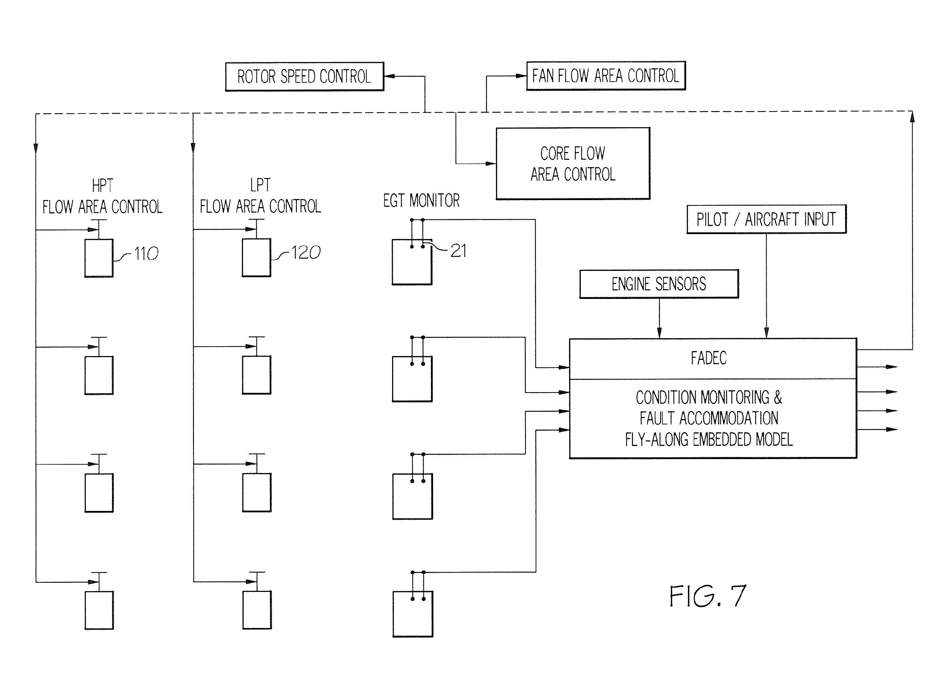

The flowpath gas temperature margin control system 12 and its method of operation are schematically illustrated in FIG. 7. The exhaust gas temperature (EGT) is measured by thermocouples 21, or other temperature measuring sensor, and a signal representing the EGT is sent to the FADEC. The FADEC monitors the limiting gas temperature such as the EGT as well as other engine and aircraft operating parameters from other engine and aircraft sensors during the engine's operation. The FADEC also receives input from the pilot operated controls as well as the engine and aircraft. The FADEC also controls the operation of apparatus to control the one or more engine parameters. The exemplary parameters and apparatus disclosed herein include the high and low pressure turbine flow areas 42, 52, controlled by the HPT and LPT actuation systems 44, 54, respectively. Also included are the fan and core flow areas 62, 72 and their respective actuators and the rotor speed N. The FADEC monitors the EGT and compares it to a predetermined or real time calculated temperature limit, calculated during engine operation, within condition monitoring & fault accommodation fly along embedded model software stored and operated within the FADEC. The one or more engine parameters are adjusted when the gas temperature exceeds the predetermined or real time calculated temperature limit as determined by the software within the FADEC. The real time calculated temperature limit is calculated during engine operation.

The one or more parameters are adjusted in real time, continuously or periodically during the engine's operation to lower the gas temperature, EGT for example, to below the temperature limit. The difference between the measured and target temperature limits governs the amount of adjustments required to the variable turbine nozzle vanes, fan cowl, and plug positions, as well as the rotor speed and the signals sent to the various actuators controlling them. The actuators change the turbine vane angles and flow areas at the entrance to the turbines, and the passage heights of the exhaust nozzles, allowing more or less flow through the engine fan and core and consequently the gas flow temperatures, while maintaining desired engine thrust output and stall margins within engine speed and temperature constraints.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the true spirit and scope of the invention.

### PARTS LIST

- 7. working fluid flowpath:
- 10.: gas turbine engine
- 12.: margin control system
- 13.: hot turbine flowpath
- 14.: fan
- 15.: fan bypass duct
- 16.: booster or low pressure compressor (LPC)
- 17.: fan exhaust nozzle
- 18.: high pressure compressor (HPC)
- 19.: fan exit
- 20.: combustion section
- 21.: thermocouple
- 22.: high pressure turbine (HPT)
- 23.: fan bypass air
- 24.: low pressure turbine (LPT)
- 25.: first stages
- 30: high pressure rotor
- 31.: HPT inlet
- 32.: LPT rotor
- 33.: LPT outlet
- 34.: HPT blades
- 35.: second stages
- 36.: LPT blades
- 40.: HPT nozzle
- 42.: HPT flow areas
- 44.: HPT actuation system
- 48.: controller
- 52.: LPT flow areas
- 54.: LPT actuation system
- 60.: LPT nozzle
- 62.: fan flow area
- 64.: fan nozzle area actuation system
- 66.: outer cowl
- 67.: inner cowl
- 68.: outer cowl linear actuators
- 69.: throat
- 70.: inner cowl linear actuators
- 72.: core flow area
- 74.: core discharge duct
- 76.: core exhaust nozzle
- 78.: core linear actuators
- 80.: core nozzle area actuation system
- 82.: nozzle plug
- 110.: HPT nozzle vanes
- 114.: HPT actuator
- 120.: LPT nozzle vanes
- 124.: LPT actuator
- N -: rotor speed
- L -: large
- S -: small

## Claims

1. A method for maintaining a limiting gas temperature (EGT) in an engine working fluid flowpath (7) in a gas turbine engine (10), the method comprising:
monitoring the gas temperature in the gas turbine engine flowpath during engine operation,
adjusting one or more engine parameters selected from a group of engine parameters including high and low pressure turbine nozzle flow areas (42, 52) and a rotor speed (N) when the gas temperature exceeds a predetermined or calculated temperature limit during the engine operation wherein the calculated temperature limit is calculated during the engine operation, and
adjusting the one or more parameters to lower the gas temperature to below the temperature limit during engine operation.

2. A method as claimed in claim 1 wherein the high and/or low pressure turbine nozzle flow areas (42, 52) are adjusted using variable high and/or low pressure turbine nozzle vanes (110, 120) respectively.

3. A method as claimed in claim 1 or claim 2 wherein the gas turbine engine (10) is an aircraft gas turbine engine and the group of engine parameters further includes fan and core flow areas (62, 72).

4. A method as claimed in claim 3 wherein the fan flow area (62) is adjusted by axially translating an outer cowl (66) forwardly and aftwardly at a fan exhaust nozzle (17) at a fan exit (19) of a bypass duct of the engine (10).

5. A method as claimed in any preceding claim wherein the core flow area (72) is adjusted by axially translating a nozzle plug (82) forwardly and aftwardly at a core exhaust nozzle (76) of the engine (10).

6. A method as claimed in any preceding claim wherein the working fluid flowpath (7) is a hot turbine flowpath (13).

7. A method as claimed in any preceding claim wherein the limiting gas temperature is an exhaust gas temperature (EGT).

8. A system method for maintaining a limiting gas temperature (EGT) in a gas turbine engine flowpath (13) in a gas turbine engine (10), the system comprising:
one or temperature measuring sensors positioned in the gas turbine engine flowpath (13) for measuring the gas temperature in the gas turbine engine flowpath during engine operation and connected to an electronic controller (48),
the electronic controller (48) being operable for monitoring for the gas temperature and adjusting one or more engine parameters selected from a group of engine parameters including high and low pressure turbine nozzle flow areas (42, 52) and a rotor speed (N) when the gas temperature exceeds a predetermined or calculated temperature limit during the engine operation wherein the calculated temperature limit is calculated by the controller during the engine operation, and
the electronic controller (48) being operable for adjusting the one or more parameters to lower the gas temperature to below the temperature limit during engine operation.

9. A system as claimed in claim 8 wherein the high and/or low pressure turbine nozzle flow areas (42, 52) are adjustable with variable high and/or low pressure turbine nozzle vanes (110, 120) respectively and the variable high and/or low pressure turbine nozzle vanes (110, 120) are operably connected to the controller (48).

10. A system as claimed in claim 8 or claim 9 wherein the gas turbine engine (10) is an aircraft gas turbine engine further comprising:
a fan bypass duct (15) surrounding a fan (14) of the engine,
a fan exhaust nozzle (17) at a fan exit (19) of the fan bypass duct (15),
a variable area core exhaust nozzle (76) within a core discharge duct (74) of the engine (10), and
the group of engine parameters further includes fan and core flow areas (62, 72) within the fan and core exhaust nozzle (17, 76) respectively.
